# EUROPEAN PATENT SPECIFICATION

(11) **EP 1 263 619 B1**
(45) Date of publication and mention of the grant of the patent: **03.12.2003**
(21) Application number: 01911734.0
(22) Date of filing: 05.03.2001
(51) Int. Cl.: B60H 1/32, F25B 9/06

(54) **AIR CONDITIONING UNIT AND A METHOD OF OPERATING AN AIR CONDITIONING UNIT, BOTH BEING IN PARTICULAR FOR MOTOR VEHICLES**
KLIMAANLAGE UND VERFAHREN ZUM BETRIEB EINER KLIMAANLAGE, BEIDE INSBESONDERE FÜR KRAFTFAHRZEUGE
DISPOSITIF DE CLIMATISATION DESTINE EN PARTICULIER A DES VEHICULES AUTOMOBILES, ET PROCEDE POUR FAIRE FONCTIONNER CE DISPOSITIF

(30) Priority: 17.03.2000 DE 10013191
(43) Date of publication of application: 11.12.2002
(73) Proprietor: Zexel Valeo Climate Control Corporation, Saitama 360-0193 (JP)
(72) Inventor: HESSE, Ullrich, 71563 Affalterbach (DE)
(74) Representative: Popp, Eugen, Dr.
(86) International application number: EP0102461
(87) International publication number: WO01068393

(56) References cited:
- DE-A- 2 636 024
- DE-A- 19 802 613
- DE-A- 19 841 686
- US-A- 4 328 684

## Description

### Field of the Invention

The present invention relates to an air conditioning unit, in particular for motor vehicles, and to a method of operating an air conditioning unit, in particular for motor vehicles.

### Description of the Prior Art

At present air conditioners for vehicles almost exclusively employ the so-called cold vapor compression process with tetrafluoroethane (R134a) as refrigerant. The refrigerant circulates through a system comprising, inter alia, a vaporizer, a compressor, a condenser, and an expansion valve. In the expansion valve an isenthalpic throttling of the refrigerant occurs. An isentropic, ideal expansion can be approached only by means of an expansion engine, but such engines have not so far been used in vehicle air conditioners. There are several reasons for this. For one thing, the energetic improvement that could have been achieved by expansion engines was relatively slight and by no means in proportion to the expense incurred, in comparison to a simple expansion valve or a throttle.

In DE 2636024 an air conditioner is disclosed for a dwelling which uses, among others, air as a refrigerant and has a gear mechanism as an expansion engine. However it does not foresee the use of CO2 and does not bring the refrigerant into a wet vapor state.

The object of the present invention is to provide an air conditioning unit that has an enhanced performance with regard to conventional air conditioning units whilst having a construction only slightly more elaborate and costly than these conventional units. An additional object is to disclose a method of operating an air conditioning unit which provides an improved performance over the methods of the prior art.

### Summary of the Invention

According to a first aspect of the present invention there is provided an air conditioning unit which operates using a refrigeration cycle in which refrigerant is put into a wet-vapor state, and which comprises at least one compressor; and at least one expansion engine in the form of a gear mechanism, the gearwheels of the gear mechanism having obliquely disposed teeth.

The problem of providing an air conditioning unit that has an enhanced performance over the prior art is thus solved in accordance with the invention by integrating a gear mechanism with obliquely toothed gearwheels into the refrigeration cycle as an expansion engine and by putting the refrigerant in the expansion engine at least partially into a wet-vapor state. The refrigerant is expanded from a high to a low pressure level.

The gear mechanism, which may, for example, be a gear pump, customarily operates with two parallel gearwheels that mesh with one another. The use of a gear mechanism for expansion of the refrigerant does not in itself allow the work of changing volume to be recovered. However, use of a gear mechanism with oblique-toothed gearwheels ensures that the gas entering the gear mechanism is able to expand, with the delivery of volume-changing work. A gear mechanism is moreover distinguished by simple, robust construction and extremely smooth running.

The expansion engine keeps the temperature of the suction gas low, which is advantageous energetically, and the compressor and the refrigerator oil are placed under less severe thermal stress. In some cases it is possible to dispense with an internal heat exchanger entirely, because the expansion engine achieves a sufficient lowering of enthalpy.

Preferably, the refrigerant is carbon dioxide, which while circulating, e.g. when used in vehicle air conditioners, during expansion at least transiently and in dependence on the ambient temperature is converted from a supercritical state into a wet-vapor state. This embodiment of an air conditioning unit in accordance with the invention is of particular significance. The combination of carbon dioxide and the use of a gear mechanism with obliquely toothed gearwheels produces major advantages. With carbon dioxide as the refrigerant rather than the tetrafluoroethane thus far used, an expansion engine can achieve larger energetic improvements and a gain in cooling performance. The air conditioning unit in accordance with the invention in a preferred embodiment can thus function in a transcritical or a subcritical process mode, depending on the temperature of the heat sink, i.e. the ambient temperature in air conditioning operation or the interior-space temperature in heat-pump operation. Because carbon dioxide has a critical point at ca. 31°C, operating conditions can be such that the refrigeration cycle runs in the transcritical range, with expansion out of the supercritical into the wet-vapor state, or in the subcritical range in which the refrigerant can be converted from a liquid into a wet-vapor-like state.

According to one preferred embodiment, the gear mechanism and the compressor are connected together in such a way that power liberated during the expansion process in the gear mechanism is used at least in part for compressing the refrigerant, as a result of which the compressor actuator can have smaller dimensions. The cost of the expansion engine is thus offset, at least in part.

The gear mechanism preferably comprises at least one inlet for inflowing refrigerant, which opens into a gap that appears between the gear teeth as the gearwheels turn. That is, as movement of the gearwheels progresses, the tooth gap becomes wider and the gas, after it has passed beyond the edge of the inlet, can expand with the delivery of volume-changing work.

Preferably, the inlet, viewed in the radial direction, is off-center with respect to the width of the gearwheels, and in accordance with the preferred embodiment is even disposed at an axial end of the gearwheels, so that the full width of the gearwheels is available for the enlargement of the tooth gap. Hence the maximal change in volume of the tooth gap is exploited.

The outlet in the gear mechanism is preferably disposed at the other axial end of the gearwheels, namely the end opposite the inlet.

Because of the oblique tooth arrangement axial forces must be absorbed by the gearwheel mounting; therefore in one embodiment of the invention several obliquely toothed gearwheels are provided. The teeth of these gearwheels are slanted in opposite directions, so that the axial forces cancel one another out partially or even completely.

The expansion engine can also be coupled to an electric machine. In this case it is preferable to aim for a hermetic construction; that is, both machines are disposed in a common housing out of which no shafts or the like project, so that no shaft seals are required. By way of the electric machine, in regulated generator operation or, on account of the frictional energy, also in drag operation a good regulation of the expansion and hence of all the process parameters can be achieved.

According to a second aspect of the present invention there is provided a method for the operation of an air conditioning unit, comprising the steps of integrating into a refrigeration cycle an expansion engine in the form of a gear mechanism with obliquely toothed gearwheels; and arranging that within the expansion mechanism a refrigerant is at least partially put into a wet-vapor state.

Preferably, the refrigerant comprises carbon dioxide, which in the expansion engine can be put into a wet-vapor state depending on the ambient temperature.

The various aspects of the present invention will now be described by way of example with reference to the accompanying drawings.

### Brief Description of the Drawings

Fig. 1 is a diagram showing the refrigeration cycle of an expansion engine which forms a part of a first embodiment of an air conditioning unit in accordance with the invention;
Figs. 2a and 2b are , respectively, schematic cross and longitudinal sections of the expansion engine;
Fig. 3 is a pressure-enthalpy diagram of an air conditioning unit in accordance with the first aspect of the invention when in a subcritical process mode;
Fig. 4 is a pressure-enthalpy diagram similar to that shown in Fig. 3 but when the air conditioning unit is in a transcritical process mode; and
Fig. 5 is a schematic longitudinal section of a second embodiment of expansion engine that can be used in an air conditioning unit in accordance with the first aspect of the invention.

### Description of the Preferred Embodiments

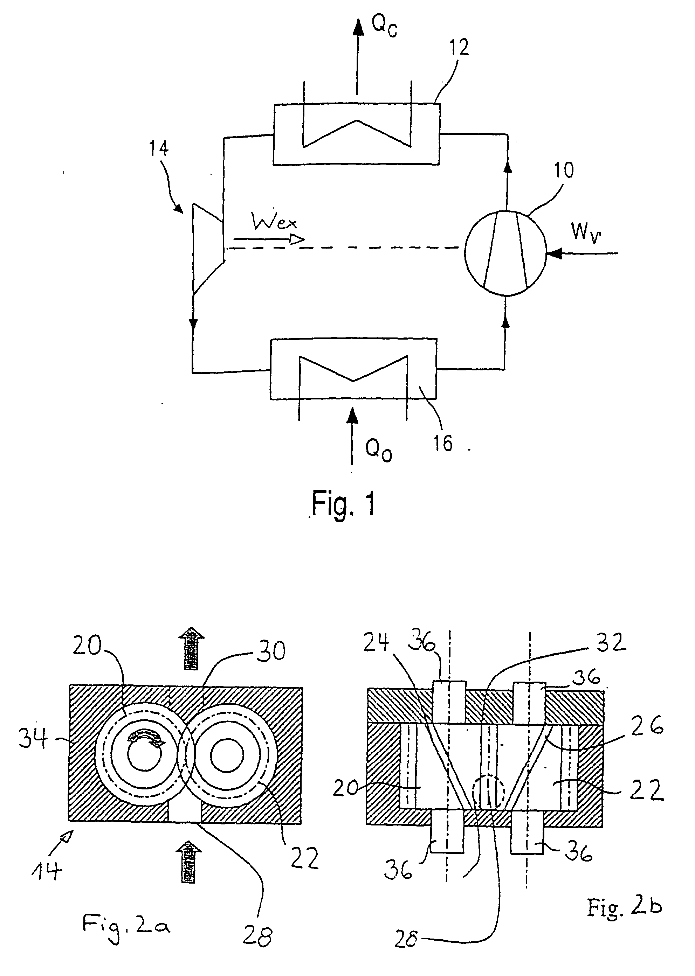

In Fig. 1 an air conditioning unit for a motor vehicle is represented by its refrigeration cycle. The refrigerant here is carbon dioxide, which can be brought to a supercritical pressure. Proceeding in the direction of flow, the circulation system comprises a compressor 10, a gas condenser 12, a gear mechanism 14, which forms an expansion engine, and a vaporizer 16. These elements are connected to one another by pipelines.

The gear mechanism 14, as shown in Figs 2a and 2b, comprises two gearwheels 20, 22 disposed in parallel and having obliquely disposed teeth, the arrangement of which is shown by the two exemplary teeth 24 and 26. An inlet 28 is positioned precisely between the two gearwheels and such that when viewed in a radial direction is off-center with respect to the width of the gearwheels. More exactly, the inlet 28 is disposed at one axial end of the gearwheels 20, 22. An outlet 30 is situated at the axial end 32 of the gearwheels 20, 22 such that it is opposite to the inlet opening 28, being disposed both at the other axial end of the gearwheels and on the opposite side of the housing 34 of the gear mechanism. The rotation of the gearwheel 20 and the direction of flow of the refrigerant is indicated by arrows.

The refrigerant, which flows into the gear mechanism 34 through the inlet 28, enters a gradually opening tooth gap that is defined by the adjacent teeth 24, 26, which mesh with one another. The tooth gap opens up as the gearwheels 20, 22 rotate, when the inflowing gas passes that region of the edge of the inlet 28 that is situated closer to the axial end 32.

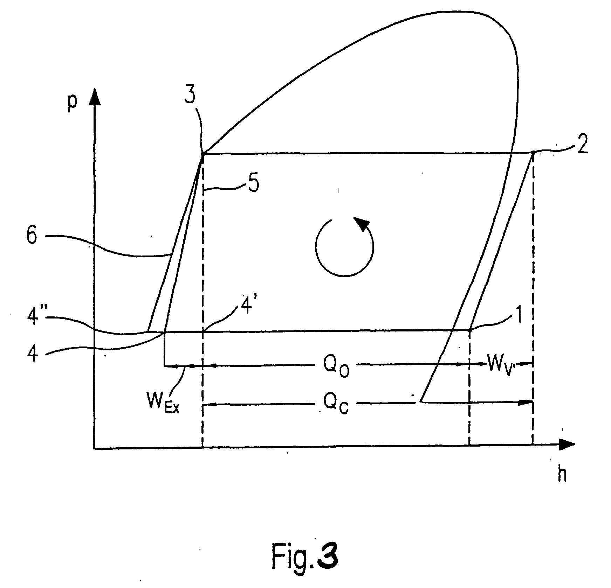

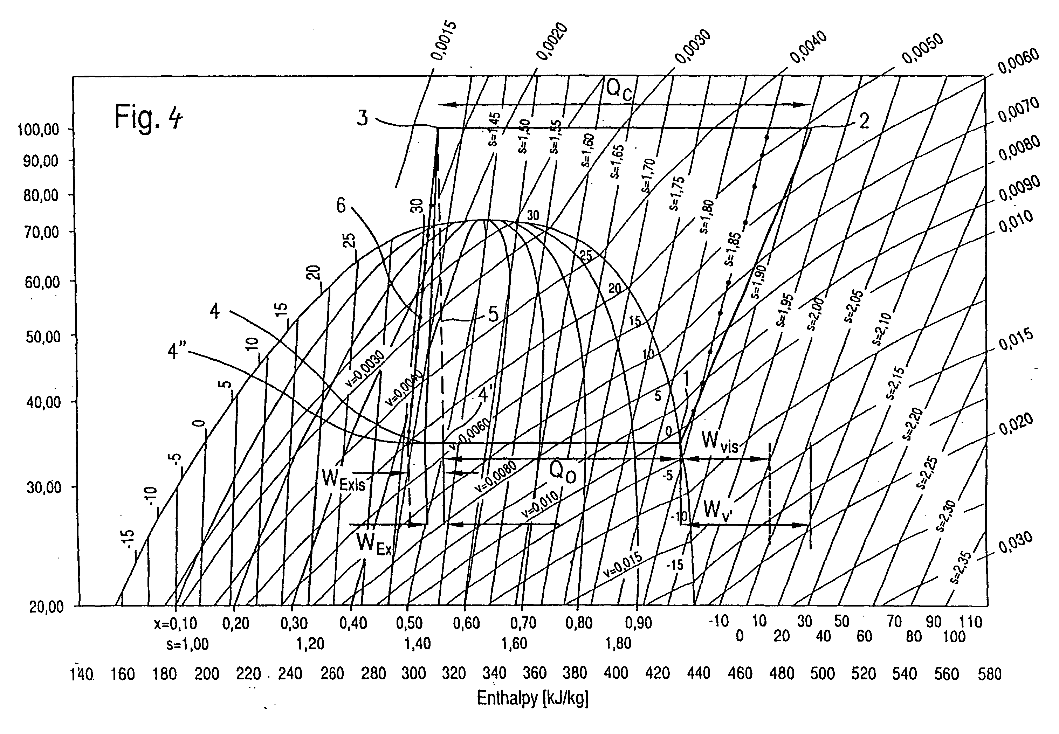

As the gearwheels continue to rotate, the gas moves toward the axial end 32 and can flow out through the outlet 30. Whereas so far only the process within the expansion engine has been described, in the following description the operation of the whole air conditioning unit will be explained, with reference to Fig. 3 for operation when in a subcritical process and to Fig. 4 for operation when in a transcritical process.

As shown in Fig. 3, in the compressor 10 the carbon dioxide is compressed from Point 1 to Point 2 by the application of energy Wᵥ; from Point 2 to Point 3 it is liquefied or brought to the point of transition between liquid and wet vapor in the condenser 12 under isobaric conditions and with the release of energy Q_{c},; from Point 3 to Point 4 it becomes decompressed into the wet-vapor region in the expansion engine, with the release of energy W_{Ex}; and finally in the vaporizer 16, with the uptake of energy Qₒ, from Point 4 to Point 1 it is converted completely into the vaporous state. The energy gain that can be achieved by the air conditioning unit in accordance with the invention, in comparison to those provided with an expansion valve, is clearly evident in Fig. 3, as follows. The dashed line 5 represents the isenthalpic expansion undergone by the refrigerant in an expansion valve during the transition from point 3 to point 4' . In this case the circulation up to this point does not provide the extra amount of energy W_{Ex}, which if available can be used, for example, to drive the compressor 10. An important factor is that when expansion occurs in the gear mechanism, the volume-change work can also be recovered.

The operation of the air conditioning unit in accordance with the invention comes distinctly closer to the ideal cyclic process represented by line 6, which is characterized by isentropic expansion from point 3 to point 4".

The expansion engine is mechanically, or preferably also electrically, coupled to the compressor 10. The electrical coupling can be achieved, for example, by connecting the expansion engine to an electric machine and placing both of them in a common housing. By means of the electric machine, in regulated generator or drag operation a good regulation of the expansion can be attained. There is no need for a shaft to project out of the common housing, e.g. to the compressor; instead, the electrical energy obtained is sent to the compressor or, for instance, fed into the vehicle's electrical system. In Fig. 3 it can also be seen that with the air conditioning unit in accordance with the invention the energy consumption Wᵥ in the compressor 10 is no different than it has been in the process previously employed, whereas the collectible cooling energy Q₀ is increased by the amount W_{Ex}. The energy values represented in the pressure-enthalpy diagram are quantities of specific energy.

The air conditioning unit in accordance with the invention will often operate not in a subcritical process mode, but also in a transcritical one, as shown in the diagram of Fig. 4. Whether the process mode is subcritical or transcritical is determined by, among other things, the ambient temperature.

In Fig, 4 the reference numerals have the same meaning as in Fig. 3. In the process illustrated here, Point 1 is at the saturation line between the vapor and the wet-vapor state. From Point 1 to Point 2 the refrigerant is condensed by application of the energy W_{v'}; isentropic condensation with the application of energy Wᵥᵢₛ is also indicated here, by the dashed lines. At Point 2 the refrigerant is in the supercritical range, in which it remains when it flows through the gas condenser 12 and undergoes an isobaric change of state until it reaches Point 3, releasing the energy Q_{c}. From Point 3 to Point 4 the refrigerant becomes decompressed into the wet-vapor region in the gear mechanism 14, releasing the energy W_{Ex}. W_{Exis} symbolizes the energy that would be achieved with an isotropic expansion. From Point 4 to Point 1 the refrigerant passes through the vaporizer, in which it takes up energy.

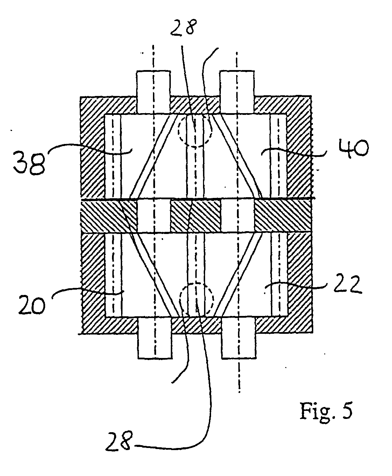

Because the oblique tooth arrangement causes axial forces to be exerted on the shaft ends 36 of the gearwheels 20, 22 and the bearings (not shown), in the embodiment shown in Fig.. 5 a plurality of gearwheels are disposed in axial sequence so that they can compensate the axial forces. The gearwheels 38, 40 are coupled to the gearwheels 20 and 22, respectively, and each has teeth slanted in a direction opposite to that of the teeth in the coupled gearwheel 20 or 22. Moreover, in the embodiment according to Fig. 5 two inlets 28 and two outlets 30 are provided.

Preferably, the energy obtained in the expansion engine is used to drive a precompressor for the refrigerant, and for this purpose the expansion engine is coupled to an appropriate precompressor. The proposed precompressor is a compressor in which the pressure ratio is not or only slightly built-in. Preferably a booster compressor serves as precompressor. As a possible variant, a vane-cell compressor can be considered. When the proposed precompressor is used, the dimensions of the compressor in the refrigeration cycle can be made considerably smaller. Preferably the precompressor is coupled to the expansion engine as a machine unit within a common housing. In this way a hermetically closed component can be made, with no apertures through which shafts project, the precompressor being actuated by coupling its shaft to the shaft of one of the two obliquely-toothed gearwheels.

## Claims

1. An air conditioning unit which operates using a refrigeration cycle in which refrigerant is put into a wet-vapor state, and which comprises
at least one compressor (10); and
at least one expansion engine (14) in the form of a gear mechanism, the gearwheels (20, 22) of the gear mechanism having obliquely disposed teeth (24, 26).

2. A unit as claimed in Claim 1, wherein the refrigerant is carbon dioxide which is converted in the refrigeration cycle from a supercritical state into a wet-vapor state.

3. A unit as claimed in Claim 2, wherein the refrigeration cycle comprises one of a transcritical and a subcritical process mode dependent on the ambient temperature.

4. A unit as claimed in Claim 1, wherein the gear mechanism is coupled to the compressor (10) in such a way that energy liberated during an expansion process in the gear mechanism is used, at least in part, to drive the compressor.

5. A unit as claimed in Claim 1, wherein the gear mechanism defines at lest one inlet (28) for an inflowing refrigerant, which inlet opens into a gap defined between the teeth of the gearwheels that becomes larger as the gearwheels rotate.

6. A unit as claimed in Claim 5, wherein the inlet (28) is disposed off-center with respect to the width of the gearwheels, as viewed in a radial direction with respect to the gearwheels

7. A unit as claimed in Claim 6, wherein the inlet (28) is disposed at one axial end of the gearwheels.

8. A unit as claimed in Claim 7, wherein **characterized in that** the gear mechanism defines at least one outlet (30), which is disposed at the end of the gearwheels opposite the inlet.

9. A unit as claimed in Claim 1, wherein a plurality of obliquely toothed gearwheels (20, 22) are disposed in the gear mechanism one behind another in an axial direction, which gearwheels have teeth that slant in opposite directions.

10. A unit as claimed in Claim 9, wherein the gearwheels (20, 22) disposed one behind another are constructed and coupled to one another in such a way that the axial forces, which are produced by the arrangement of their oblique teeth and which are exerted on gearwheels disposed one behind another in the axial direction, compensate one another.

11. A unit as claimed in Claim 1, comprising an electric machine which is coupled to the gear mechanism, both being disposed in a common housing to form a hermetic unit.

12. A unit as claimed in Claim 1, comprising a precompressor for the refrigerant which is coupled to the expansion engine.

13. A unit as claimed in Claim 12, wherein the precompressor is a booster compressor.

14. A unit as claimed in Claim 12, according to Claim 12 or 13, **characterized in that** a shaft of the precompressor is coupled to a shaft of one of the obliquely toothed gearwheels of the gear mechanism.

15. A method for the operation of an air conditioning unit, comprising the steps of:
- integrating into a refrigeration cycle an expansion engine (14) in the form of a gear mechanism with obliquely toothed gearwheels (20, 22); and
- arranging that within the expansion mechanism a refrigerant is at least partially put into a wet-vapor state.

16. A method as claimed in Claim 15, wherein the refrigerant comprises carbon dioxide, which within the expansion engine is brought from a supercritical into a wet-vapor state dependent on the ambient temperature.

17. A method as claimed in Claim 16, wherein the expansion mechanism functions in one of a transcritical and a subcritical process mode depending on the ambient temperature.

18. A method as claimed in Claims 15, wherein the process parameters are regulated by control of an electric machine.

19. A method as claimed in Claim 18, wherein the refrigerant comprises carbon dioxide, the pressure of which is regulated by control of the electric machine.

## Patentansprüche

1. Klimaanlage, welche unter Verwendung eines Kühlzyklus arbeitet, bei dem Kühlmittel in einen Nassdampfzustand versetzt wird, und welche umfasst:
mindestens einen Kompressor (10); und
mindestens eine Expansionsmaschine (14) in Form eines Zahnradmechanismus, wobei die Zahnräder (20, 22) des Zahnmechanismus schräg angeordnete Zähne (24, 26) haben.

2. Anlage nach Anspruch 1, bei der das Kühlmittel Kohlendioxid ist, welches im Kühlzyklus aus einem superkritischen Zustand in einen Nassdampfzustand umgesetzt wird.

3. Anlage nach Anspruch 2, bei der der Kühlzyklus in Abhängigkeit von der Umgebungstemperatur einen transkritischen oder subkritischen Prozessmodus umfasst.

4. Anlage nach Anspruch 1, bei der der Zahnradmechanismus derart an den Kompressor (10) gekoppelt ist, dass Energie, die während eines Expansionsprozesses frei wird, zumindest teilweise zum Antreiben des Kompressors genutzt wird.

5. Anlage nach Anspruch 1, bei der der Zahnradmechanismus mindestens einen Einlass (28) für ein zufließendes Kühlmittel bildet, welcher Einlass in einen zwischen den Zähnen der Zahnräder gebildeten Spalt mündet, der größer wird, wenn sich die Zahnräder drehen.

6. Anlage nach Anspruch 5, bei der der Einlass (28) hinsichtlich der Breite der Zahnräder, in einer radialen Richtung hinsichtlich der Zahnräder gesehen, außermittig angeordnet ist.

7. Anlage nach Anspruch 6, bei der der Einlass (28) an einem axialen Ende der Zahnräder angeordnet ist.

8. Anlage nach Anspruch 7, bei der der Zahnradmechanismus mindestens einen Auslass (30) bildet, welcher am Ende der Zahnräder dem Einlass entgegengesetzt angeordnet ist.

9. Anlage nach Anspruch 1, bei der mehrere schräg gezahnte Zahnräder (20, 22) im Zahnradmechanismus hintereinander in einer axialen Richtung angeordnet sind, welche Zahnräder Zähne aufweisen, die sich in entgegengesetzte Richtungen neigen.

10. Anlage nach Anspruch 9, bei der die hintereinander angeordneten Zahnräder (20, 22) derart aufgebaut und miteinander verbunden sind, dass die axialen Kräfte, welche durch die Anordnung ihrer schrägen Zähne erzeugt werden, und mit welchen die hintereinander in der axialen Richtung angeordneten Zahnräder beaufschlagt werden, einander kompensieren.

11. Anlage nach Anspruch 1, eine Elektromaschine umfassend, welche mit dem Zahnradmechanismus verbunden ist, wobei beide in einem gemeinsamen Gehäuse angeordnet sind, um eine hermetische Einheit zu bilden.

12. Anlage nach Anspruch 1, einen Vorkompressor für das Kühlmittel umfassend, welcher mit der Expansionsmaschine verbunden ist.

13. Anlage nach Anspruch 12, bei der der Vorkompressor ein Booster-Kompressor ist.

14. Anlage nach Anspruch 12, nach Anspruch 12 oder 13, bei der eine Welle des Vorkompressors mit einer Welle eines der schräg gezahnten Zahnräder des Zahnradmechanismus verbunden ist.

15. Verfahren zum Betrieb einer Klimaanlage, das folgende Schritte umfasst:
- Integrieren einer Expansionsmaschine (14) in Form eines Zahnradmechanismus mit schräg gezahnten Zahnrädern (20, 22) in einen Kühlzyklus; und
- Anordnen, dass innerhalb der Expansionsmaschine ein Kühlmittel zumindest teilweise in einen Nassdampfzustand versetzt wird.

16. Verfahren nach Anspruch 15, bei dem das Kühlmittel Kohlendioxid umfasst, welches innerhalb der Expansionsmaschine in Abhängigkeit von der Umgebungstemperatur aus einem superkritischen in einen Nassdampfzustand versetzt wird.

17. Verfahren nach Anspruch 16, bei dem der Expansionsmechanismus in Abhängigkeit von der Umgebungstemperatur in einem transkritischen oder subkritischen Prozessmodus arbeitet.

18. Verfahren nach Anspruch 15, bei dem die Prozessparameter durch Steuerung einer Elektromaschine geregelt werden.

19. Verfahren nach Anspruch 18, bei dem das Kühlmittel Kohlendioxid umfasst, dessen Druck durch Steuerung der Elektromaschine geregelt wird.

## Revendications

1. Une unité de conditionnement d'air qui fonctionne en utilisant un cycle de réfrigération dans lequel un réfrigérant est mis en un état de vapeur humide et qui comprend :
au moins un compresseur (10) ; et
au moins un moteur d'expansion (14) sous la forme d'un mécanisme d'entraînement, les roues d'entraînement (20, 22) du mécanisme d'entraînement ayant des dents (24, 26) disposées de façon oblique.

2. Unité selon la revendication 1, dans laquelle le réfrigérant est du dioxyde de carbone qui, dans le cycle de réfrigération, est converti d'un état supercritique à l'état de vapeur humide.

3. Unité selon la revendication 2, dans laquelle le cycle de réfrigération comprend un mode d'un traitement transcritique et subcritique en fonction de la température ambiante.

4. Unité selon la revendication 1, dans laquelle le mécanisme d'entraînement est couplé au compresseur (10) d'une manière telle que l'énergie libérée pendant un processus d'expansion dans le mécanisme d'entraînement est utilisée au moins partiellement pour entraîner le compresseur.

5. Unité selon la revendication 1, dans laquelle le mécanisme d'entraînement définit au moins une admission (28) pour un réfrigérant affluant, ladite admission s'ouvrant dans un interstice défini entre les dents des roues d'entraînement qui devient plus grand lorsque les roues d'entraînement tournent.

6. Unité selon la revendication 5, dans laquelle l'admission (28) est disposée de façon excentrée par rapport à la largeur des roues d'entraînement telle que vue en une direction radiale par rapport aux roues d'entraînement.

7. Unité selon la revendication 6, dans laquelle l'admission (28) est disposée en une extrémité axiale des roues d'entraînement.

8. Unité selon la revendication 7, dans laquelle le mécanisme d'entraînement définit au moins une évacuation (30) qui est disposée à l'extrémité des roues d'entraînement opposée à l'admission.

9. Unité selon la revendication 1, dans laquelle une pluralité de roues d'entraînement (20, 22), dentées en oblique est disposée dans le mécanisme d'entraînement, l'une après l'autre en une direction axiale, lesdites roues d'entraînement ayant des dents s'inclinant en des directions opposées.

10. Unité selon la revendication 9, dans laquelle les roues d'entraînement (20, 22) disposées l'une après l'autre sont construites et couplées l'une à l'autre de manière telle que les forces axiales produites par l'arrangement de leurs dents obliques et qui sont exercées sur des roues d'entraînement disposées l'une après l'autre en direction axiale, se compensent mutuellement.

11. Unité selon la revendication 1, comprenant une machine électrique qui est couplée au mécanisme d'entraînement, les deux étant disposés dans un boîtier commun pour former une unité hermétique.

12. Unité selon la revendication 1, comprenant un précompresseur pour le réfrigérant, qui est couplé avec la machine d'expansion.

13. Unité selon la revendication 12, dans laquelle le précompresseur est un compresseur "booster".

14. Unité selon la revendication 12 ou 13, **caractérisée en ce qu'**un arbre du précompresseur est couplé à un arbre de l'une des roues d'entraînement à dents obliques du mécanisme d'entraînement.

15. Une méthode d'exploitation d'une unité d'air conditionné comprenant les étapes de :
- l'intégration dans un cycle de réfrigération d'une machine d'expansion (14) sous la forme d'un mécanisme d'entraînement comportant des roues d'entraînement à dents oblique (20, 22) ; et
- l'aménagement de ce que, à l'intérieur de la machine d'expansion, un réfrigérant est, au moins partiellement, mis en un état de vapeur humide.

16. Méthode selon la revendication 15, dans laquelle le réfrigérant comprend du dioxyde de carbone qui, à l'intérieur de la machine d'expansion, est amené d'un état supercritique à un état de vapeur humide en fonction de la température ambiante.

17. Méthode selon la revendication 16, dans laquelle la machine d'expansion fonctionne en l'un des modes de traitement transcritique et subcritique selon la température ambiante.

18. Méthode selon la revendication 15, dans laquelle les paramètres de processus sont régulés par le contrôle d'une machine électrique.

19. Méthode selon la revendication 18, dans laquelle le réfrigérant comprend du dioxyde de carbone dont la pression est régulée par le contrôle de la machine électrique.
